# FASCICULE DE BREVET EUROPEEN

(11) **EP 2 861 076 B1**
(45) Date de publication et mention de la délivrance du brevet: **12.10.2016**
(21) Numéro de dépôt: 13737331.2
(22) Date de dépôt: 17.06.2013
(51) Int. Cl.: A22C 7/00

(54) **PROCEDE DE FABRICATION EN CONTINU DE VIANDE HACHEE CUITE EN CONTINU, RECONSTITUEE EN PLAQUES MINCES, ET INSTALLATION POUR LA MISE EN OEUVRE DUDIT PROCEDE**
VERFAHREN ZUR KONTINUIERLICHEN HERSTELLUNG VON IN DÜNNEN PLATTEN WIEDERVERARBEITETEM HACKFLEISCH, SOWIE ANLAGE ZUR DURCHFÜHRUNG DIESES VERFAHRENS
METHOD FOR CONTINUOUS PRODUCTION OF COOKED MINCED MEAT RESTRUCTURED IN THIN SLABS AND INSTALLATION FOR THE IMPLEMENTATION OF SAID METHOD

(30) Priorité: 18.06.2012 FR 1255673
(43) Date de publication de la demande: 22.04.2015
(73) Titulaire: Adiv Developpement, 63100 Clermont-Ferrand (FR)
(72) Inventeur: RISPAL, Olivier, 15100 Saint-Flour (FR); PEYRON, Alain, 63400 Chamalieres (FR)
(74) Mandataire: Cabinet Laurent & Charras
(86) Numéro de dépôt international: PCT/FR2013/051414
(87) Numéro de publication internationale: WO 2013/190228

(56) Documents cités:
- EP-A2- 0 074 185
- WO-A1-97/05020
- FR-A1- 2 827 122
- JP-A- 62 220 407
- US-A- 5 071 665

## Description

### DOMAINE TECHNIQUE

La présente invention se rapporte au secteur technique de l'industrie de la viande, de sa transformation et de son conditionnement, et concerne plus particulièrement un procédé de fabrication en continu de viande hachée cuite en continu, reconstituée en plaques minces. L'invention concerne également une installation pour la mise en oeuvre dudit procédé.

### ART ANTERIEUR

Selon l'art antérieur, il a été mis au point un procédé permettant de conditionner la viande hachée en fines tranches en vue d'une présentation en barquettes lors de leur commercialisation.

Le procédé de l'état de la technique, notamment divulgué par la demande de brevet français N° FR 2 827 122, est remarquable en ce qu'il met en oeuvre les phases suivantes, à partir de viande hachée, pour l'obtention en continu de viande hachée salée et séchée reconstituée en plaques minces.
- La première phase consiste en un hachage fin de viande plus ou moins noble, dans un appareil hachoir, malaxeur.
- La seconde phase consiste à la sortie de l'appareil, d'acheminer la viande hachée dans une pompe à viande, assurant une présentation continue sous forme d'un tube ou d'une bande aplatie continue.
- La troisième phase consiste à dérouler un film en une ou plusieurs parties, susceptible de constituer un fourreau étanche autour du tube continu ou bande de viande hachée.
- La quatrième phase consiste à faire passer ledit tube ou bande de viande hachée disposé dans le fourreau dans un dispositif de laminage, permettant l'étalement de la viande hachée dans une configuration en bande, selon une couche mince, dans un état de compactage et de texture ne faisant pas apparaître les parties de viande elles-mêmes.
- La cinquième phase consiste à dérouler en continu dans un bain de solution de déshydratation - salage, la bande de viande hachée étirée.
- La sixième phase consiste en sortie du bain de solution à enlever le film constituant le fourreau.
- La septième phase consiste à acheminer la bande mince de viande hachée laminée et séchée vers un poste de découpe et de conditionnement.

Ce procédé présente de nombreux intérêts et avantages, tant en termes de productivité que de présentation de produit, cependant il ne permet pas d'obtenir une viande cuite en continu, mais plutôt une viande séchée.

Un autre exemple de procédé, correspondant au préambule de la revendication 1, est décrit dans la demande de brevet européen EP 0 074 185.

### EXPOSE DE L'INVENTION

Le but de l'invention est de remédier aux inconvénients précités en proposant un procédé de fabrication en continu de viande hachée cuite en continu, reconstituée en plaques minces, permettant d'obtenir en sortie une viande cuite en continu, possédant une stabilité microbiologique optimale.

L'invention vise également à fournir une installation pour la mise en oeuvre du procédé qui soit de conception simple sûre et rationnelle.

Pour atteindre ses objectifs, il a été mis au point un procédé de fabrication et de transformation de viande hachée.

Selon l'invention, le procédé met en oeuvre, à partir de viande hachée, pour l'obtention en continu de viande hachée salée et cuite en continu reconstituée en plaques minces, les étapes consistant à :
- assurer une présentation en continu de ladite viande hachée sous forme d'un tube ou d'une bande aplatie continue ;
- déposer le tube ou la bande aplatie continue de viande entre deux feuilles de film à perméabilité contrôlée ;
- égaliser l'épaisseur et étaler la viande hachée disposée entre les deux feuilles de film, dans une configuration en bande, selon une couche mince, dans un état de compactage et de texture ne faisant pas apparaître les parties de viande elles-mêmes ;
- dérouler en continu dans un bain de solution de cuisson la bande de viande hachée étirée ;
- dérouler en continu dans une cuve de rinçage la bande de viande hachée étirée cuite en continu ;
- enlever, en sortie de la cuve de rinçage, les feuilles de papier ;
- acheminer la bande mince de viande hachée laminée cuite en continu et rincée vers un convoyeur de sortie.

De cette manière, le procédé précité permet de cuire en continu la viande préalablement hachée, salée épicée ou non. La viande obtenue n'est ainsi pas séchée mais cuite en continu. La viande obtenue est donc stable microbiologiquement.

De plus l'étape consistant à dérouler en continu dans une cuve de rinçage la bande de viande hachée étirée cuite en continu permet de faciliter l'étape consistant à enlever les feuilles de film à perméabilité contrôlée. En effet, lorsque la viande est cuite, le film adhère à celle-ci. Le rinçage permet donc de décoller plus facilement le film mais aussi de rincer la solution de cuisson résiduelle et de pouvoir la recycler.

Selon une mise en oeuvre particulière du procédé selon l'invention, celui-ci comprend, ultérieurement à l'étape consistant à égaliser l'épaisseur et étaler la viande hachée disposée entre les deux feuilles de papier, les étapes consistant à écraser les bordures de la bande de viande de façon à isoler totalement la viande de la solution de cuisson, et à ajuster la surépaisseur de viande provoquée par l'écrasement.

Le procédé comprend, ultérieurement aux étapes d'écrasement et d'ajustement de la surépaisseur, une étape consistant à replier les bordures écrasées sur la bande de viande.

Le procédé comprend, ultérieurement à l'étape d'acheminement de la bande mince de viande vers le convoyeur de sortie, une étape consistant à appliquer un film plastique intercalaire sur ladite bande de viande et à l'enrouler sur elle-même.

Cette étape permet le stockage de la viande sous forme de rouleau, et la mise en place du film plastique permet de faciliter l'étape de déroulage dudit rouleau, la viande n'adhérant pas à la surface plastique.

Dans une autre forme de réalisation, le procédé comprend, ultérieurement à l'étape d'acheminement de la bande mince de viande vers le convoyeur de sortie, une étape consistant à découper en continu ladite bande de viande, afin de directement préparer une mise en barquettes desdites tranches de viande découpées.

Pour atteindre les objectifs précités, il a également été mis au point une installation pour la fabrication et la transformation de viande hachée, à partir de viande préalablement hachée, pour l'obtention en continu de viande hachée salée, cuite en continu reconstituée en plaques minces.

Selon l'invention, l'installation comprend :
- une trémie d'alimentation, recevant en sortie une pompe à viande reliée à une buse d'extrusion pour la présentation de la viande hachée sous forme d'un tube ou d'une bande aplatie continue ;
- un convoyeur destiné à récupérer la bande de viande à la sortie de la buse d'extrusion ;
- un premier système de distribution et de disposition sur le convoyeur d'une première feuille de film à perméabilité contrôlée, sous la bande de viande ;
- un deuxième système de distribution et de disposition sur la bande de viande d'une deuxième feuille de film à perméabilité contrôlée ;
- un premier dispositif de laminage disposé en aval desdits systèmes de distribution et de disposition des feuilles de papier ;
- un bain de solution de cuisson recevant un dispositif mécanique de convoyage de la bande de viande hachée étirée ;
- une cuve de rinçage recevant un dispositif mécanique de convoyage de la bande de viande hachée étirée cuite en continu ;
- un dispositif permettant de séparer les feuilles de film de la bande de viande cuite en continu, en aval de la cuve de rinçage ;
- un convoyeur de sortie.

De cette manière, la viande hachée est alimentée en continu au moyen de la pompe à viande, dans la buse d'extrusion. Cette buse permet de former une plaque de viande en couche mince en continu. Cette plaque de viande est ensuite positionnée entre deux feuilles de film à perméabilité contrôlée afin de former une bande de viande. Cette bande de viande est alors plongée dans un bain de solution de cuisson pour être cuite en continu. La durée de cuisson est variable et dépend du degré de cuisson souhaité sur le produit fini. Après avoir été cuite en continu, la bande de viande est ensuite rincée avec de l'eau puis convoyée vers un tapis où elle est dépouillée du film à perméabilité contrôlée.

Selon une forme de réalisation particulière l'installation comprend en aval du dispositif de laminage, deux molettes d'écrasement des bordures de la bande de viande, et un deuxième dispositif de laminage.

De cette manière les bordures de la bande de viande sont écrasées par les molettes d'écrasement de façon à isoler totalement la viande de la solution de cuisson, et la surépaisseur de viande provoquée par l'écrasement est ajustée par le deuxième dispositif de laminage.

L'installation comprend également, en aval du deuxième dispositif de laminage, des moyens permettant le pliage des bordures écrasées de la bande de viande, sur ladite bande de viande.

Selon une forme de réalisation de l'installation, celle-ci comprend, en aval du convoyeur de sortie, un système de distribution et de disposition d'un film plastique sur la bande de viande et des moyens permettant d'enrouler la bande de viande sur elle-même.

Selon une autre forme de réalisation, l'installation comprend, en aval du convoyeur de sortie, un dispositif de découpe et de conditionnement en tranches fines de la viande hachée cuite.

Ainsi, la bande de viande après avoir été rincée et dépouillée de son film à perméabilité contrôlée, ainsi cuite en continu peut être enroulée sur elle-même pour former un rouleau ou être coupée en continu de façon à être conditionnée.

La viande cuite en continu conditionnée sous vide peut ensuite être traitée à haute pression afin de stabiliser microbiologiquement le produit fini dans son emballage final.

De préférence, dans l'installation selon l'invention, le bain de solution de cuisson est un bain de saumure de cuisson à une température supérieure à 60°C.

De préférence la saumure de cuisson possède un pH inférieur à 7, ce qui permet d'abaisser le pH de la viande et de la stabiliser microbiologiquement. La saumure de cuisson étant ainsi acide, les bactéries ne poussent plus dans celle-ci, la saumure est également stabilisée microbiologiquement.

### BREVE DESCRIPTION DES DESSINS

L'invention sera bien comprise et d'autres caractéristiques et avantages de l'invention ressortiront clairement de la description qui en est faite ci-après, à titre indicatif et nullement limitatif, en référence aux figures annexées, dans lesquelles :
- la figure 1 est une vue de bandes de viande hachée cuite en continu, reconstituée en plaque mince obtenues par le procédé selon l'invention ;
- la figure 2 est une vue à caractère schématique illustrant l'installation de mise en oeuvre du procédé selon l'invention ;

### EXPOSE DETAILLE DE L'INVENTION

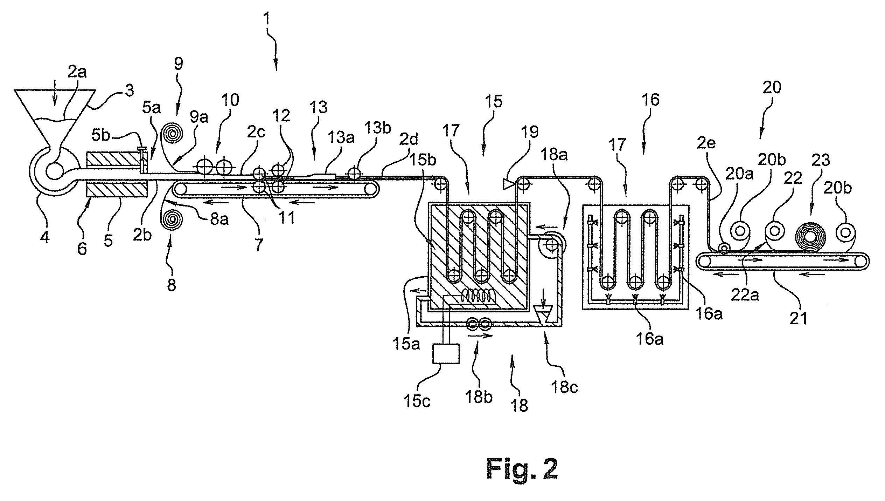

L'installation (1) permettant la fabrication en continu de viande hachée salée et cuite en continu reconstituée en plaques minces comprend d'amont en aval les différents moyens suivants représentés figure 2.

La viande hachée et traitée est référencée dans son ensemble (2) par et on utilisera des sous-références en fonction des différentes phases de traitement et de mise en oeuvre du procédé, en se rapportant à sa forme.

L'installation (1) comprend une trémie d'alimentation (3) de réception de viande hachée (2a), plus ou moins noble, à l'état brut. La trémie (3) peut recevoir soit uniquement de la viande hachée à l'état brut, soit également des produits alimentaires complémentaires tels que des épices et autres ingrédients pouvant apporter des qualités nutritives ou sensorielles au produit final.

Ladite trémie d'alimentation (3) présente en sortie une pompe à viande (4) reliée à une buse d'extrusion (5). La pompe à viande (4) permet une alimentation en continu en viande hachée (2a) de la buse d'extrusion (5).

La buse d'extrusion (5) permet la présentation de la viande hachée sous forme d'un tube ou d'une bande aplatie continue (2b), en vue d'un défilement continu. La viande hachée se trouve ainsi dans une configuration tubulaire ou aplatie pendant une phase de fabrication.

Dans une forme de réalisation particulière de l'invention, l'épaisseur de la viande est ajustée par le réglage de l'extrémité de la buse (5), et notamment de la dimension de son ouverture (5a). Plus précisément, une série de vis (5b) permet de resserrer ladite extrémité et de faire varier l'ouverture de ladite buse (5) pour obtenir des plaques de viande (2b) plus ou moins épaisses. La paroi de la buse d'extrusion (5) est de préférence doublée pour permettre d'introduire dans l'espace situé entre les deux parois des moyens de chauffage (6) pour chauffer légèrement la viande circulant dans la buse d'extrusion (5). Cela permet notamment d'éviter le dépôt de certaines matières grasses contenues dans la viande sur les parois de la buse d'extrusion (5).

En aval, se trouve un convoyeur (7) destiné à récupérer la bande de viande (2b) à la sortie de la buse d'extrusion (5).

L'installation (1) comprend également un premier système de distribution et de disposition (8) sur le convoyeur (7) d'une première feuille de film (8a) à perméabilité contrôlée, sous la bande de viande (2b).

Ce premier système (8) se présente avantageusement sous la forme d'un premier rouleau de film à perméabilité contrôlé, agencé sensiblement sous le convoyeur (7), au niveau de son extrémité et destiné à dérouler une première feuille de film (8a) qui vient se poser sur ledit convoyeur (7). Le premier rouleau de film (8) est maintenu par ses deux extrémités par des supports disposés de part et d'autre dudit convoyeur (7), et de manière pivotante pour autoriser un déroulage de ladite première feuille de film (8a). La première feuille de film (8a) recouvre ainsi sensiblement la surface du convoyeur (7), et la bande de viande (2b) récupérée par ledit convoyeur (7) se trouve déposée sur ladite première feuille de film (8a) à perméabilité contrôlée.

L'installation (1) comprend un deuxième système de distribution et de disposition (9) sur la bande de viande (2b) d'une deuxième feuille de film (9a) à perméabilité contrôlée. Ce deuxième système (9) se présente sous la forme d'un deuxième rouleau de film, similaire au premier, agencé sensiblement au dessus du convoyeur (7), au niveau de son extrémité et destiné à dérouler une deuxième feuille de film (9a) qui vient se poser sur la bande de viande (2b). Le deuxième rouleau de film est maintenu par ses deux extrémités par des supports disposés de part et d'autre dudit convoyeur (7), et de manière pivotante pour autoriser un déroulage de ladite deuxième feuille de film (9a) à perméabilité contrôlée.

Un système mécanique est prévue, permettant un déroulement des première (8a) et deuxième (9a) feuilles de film à une vitesse définie en fonction des conditions de traitement de la viande.

Le tube ou la bande (2b) de viande hachée enveloppée et protégée par lesdites feuilles de film (8a, 9a) à perméabilité contrôlée est ensuite acheminée vers un dispositif de laminage (10) pouvant être horizontal ou vertical comprenant plusieurs paires de rouleaux de laminage permettant un écrasement progressif et un étirement en couche mince de la viande hachée. En conséquence, en sortie de laminage, la viande hachée se présente entourée des feuilles de film (8a, 9a) à perméabilité contrôlée, dans un état (2c) aplati dans une bande continue mince, compact, sans qu'apparaissent les granules de viande hachée, en donnant l'apparence d'une texture continue et ferme.

En aval du laminage, l'installation (1) comprend dans une forme de réalisation particulière, deux molettes d'écrasement (11) des bordures de la bande de viande, et un deuxième dispositif de laminage (12). Les molettes (11) sont agencées de part et d'autre de la bande de viande (2c), sur les bordures de celle-ci. La rotation des molettes (11) est mécanisée, elles sont maintenues par des supports, et en contact avec le convoyeur (7) pour écraser les bordures de la bande de viande (2c), lorsque celles-ci passent entre le convoyeur (7) et lesdites molettes (11). L'écrasement de la bande de viande (2c) permet notamment de sceller les première (8a) et deuxième (9a) feuilles de film et d'isoler la viande à l'intérieur desdites feuilles en vue de son immersion ultérieure dans un bain de solution de cuisson.

Le deuxième dispositif de laminage (12) est similaire au premier dispositif de laminage (10), il se présente à cet effet, sous la forme d'un rouleau permettant d'écraser la bande de viande (2c) afin de réajuster la surépaisseur de viande provoquée par l'écrasement des bordures.

En aval du deuxième dispositif de laminage (12), l'installation (1) comprend des moyens (13) permettant le pliage des bordures écrasées de la bande de viande (2c), sur ladite bande de viande. Ces moyens (13) se présentent sous la forme de deux parties latérales (13a) du convoyeur repliées chacune suivie d'une molette (13b) permettant le pressage de la bordure repliée. Les bordures, du fait de l'avancement de la bande de viande (2c) sur le convoyeur (7), se trouvent repliée lorsqu'elles coopèrent avec lesdites parties latérales (13a). Cela permet notamment de rendre optimale l'isolation de la viande en vue de son immersion dans le bain de solution de cuisson.

La bande continue de viande hachée étirée et laminée (2d) est ensuite introduite successivement dans un bain de solution de cuisson (15), et une cuve de rinçage (16).

A cet effet, le bain (15) ainsi que la cuve (16) inclut un dispositif (17) continu de convoyage à rouleaux permettant un cheminement de la bande de viande (2d) dans le bain (15) ou la cuve (16) et pour un temps considéré. La longueur du bain (15) ou de la cuve (16) est déterminée par le temps d'immersion nécessaire à l'effet de cuisson de la viande dans un premier temps et à l'effet de rinçage dans un deuxième et dernier temps.

Le bain de solution de cuisson (15) est agencé avec un circuit (18) de recyclage et de réinjection de solution. Le circuit (18) comprend à cet effet une pompe de réinjection (18a), ainsi que des capteurs (18b) de contrôle de pH et des concentrations en soluté du bain de cuisson. Un dispositif (18c) de concentration par évaporation et de dosage intégré dans ledit circuit permet de réajuster le pH la concentration et la composition de la solution.

Les dispositifs (17) de convoyage peuvent être immergés en tout ou partie dans le bain de solution de cuisson (15), et la cuve (16) de rinçage.

Le bain de solution de cuisson (15) se présente sous la forme d'une cuve (15a) contenant une solution de saumure de cuisson (15b) de préférence acidifiée. Le pH de la saumure de cuisson est notamment inférieur à 7 et sa température est supérieure à 60°C. Le bain de saumure de cuisson (15) permet de cuire en continu la bande de viande (2d). Le bain de saumure de cuisson (15) permet de maintenir la saumure de cuisson (15b) à une température relativement élevée pour cuire la viande en continu. La solution de saumure de cuisson (15b) est donc chauffée, par un échangeur thermique (15c) par exemple. De préférence, la paroi de la cuve (15a) de cuisson est isolée, afin de limiter au maximum les pertes thermiques. La durée de cuisson de la viande dépend de la durée de contact avec la saumure de cuisson (15b). Le pH acide de la saumure de cuisson permet également de faire baisser le pH de la viande durant sa cuisson afin d'augmenter sa stabilité microbiologique.

Un moyen de raclage (19), tel une raclette est avantageusement agencée en sortie de la cuve (15a) de cuisson, de manière à racler la surface de la bande de viande afin de racler la saumure résiduelle sur la deuxième feuille de film (9a) et de la faire retomber dans ladite cuve (15a) de cuisson pour préparer de façon optimale l'étape de rinçage.

La cuisson de la viande en continu permet également de réduire la flore microbienne de ladite viande, ce qui contribue fortement à sa stabilité microbiologique.

La cuve de rinçage (16) se présente sous la forme d'une cuve munie d'une pluralité de buses (16a) de pulvérisation de solution de rinçage, telle que de l'eau, destinées à pulvériser de l'eau sur la bande de viande afin de rincer celle-ci et d'optimiser la séparation de la viande et du film (8a, 9a) à perméabilité contrôlée.

En ce qui concerne les première (8a) et deuxième (9a) feuilles de film entourant la viande hachée et laminée, celles-ci sont choisies pour répondre à différents critères, tenant compte des conditions du procédé de l'invention.

Ces feuilles (8a, 9a) de film à perméabilité contrôlée doivent tout d'abord être aptes à ne pas être détériorées pendant le temps de trempage dans le bain de solution de cuisson (15). Elles doivent avoir une perméabilité contrôlée et permettre également par conduction l'effet recherché de la cuisson de la viande dans l'intégralité de son volume et épaisseur, et plus généralement des propriétés que lui donne la solution. Ces feuilles (8a, 9a) doivent par ailleurs avoir une tenue lors du passage dans le dispositif de convoyage (17) disposé dans le bain de solution de cuisson (15), et dans la cuve de rinçage (16), et notamment lors du passage autour des différents rouleaux de renvoi.

En pratique, le demandeur a sélectionné du film à perméabilité contrôlée (8a, 9a) répondant d'une manière optimisée à toutes ces contraintes. Il peut être constitué de tout matériau permettant la diffusion de l'eau, tel que fibres animales (collagène), cellulose, polyéther sulfane...

En sortie de la cuve de rinçage (16), la bande de viande hachée étirée cuite en continu (2e) est acheminée vers un dispositif (20) permettant de séparer les feuilles (8a, 9a) de film de la bande de viande (2e) et un convoyeur de sortie (21).

Le convoyeur de sortie (21) est apte à récupérer la bande de viande (2e) en sortie de la cuve de rinçage (16) et de l'acheminer vers des postes de conditionnement ou de découpe.

Le dispositif (20) permettant de séparer les feuilles (8a, 9a) de film de la bande de viande (2e) se présente, dans une forme de réalisation préférée, sous la forme de deux moyens d'ouverture (20a), telles que des brosses circulaires, libres en rotation disposées au niveau des bordures de la bande de viande (2e) et aptes à déplier sur les bordures écrasées et repliées le long de ladite bande de viande, le dispositif comprend également des fourreaux (20b) montés libres en rotation et destinés à récupérer lesdites feuilles (8a, 9a) de film à perméabilité contrôlée en les enroulant autour desdits fourreaux.

L'installation (1), et plus particulièrement le convoyeur de sortie (21) comprend en outre dans une forme de réalisation préférée, un système de distribution et de disposition (22) d'un film plastique intercalaire (22a) sur la bande de viande dépouillée de son film, et des moyens (23) permettant d'enrouler la bande de viande sur elle-même. Le système de distribution et de disposition (22) se présente sous la forme d'un rouleau de film plastique, agencé au niveau du convoyeur de sortie (21) maintenu par ses extrémités et monté libre en rotation de manière à pouvoir déposer une bande de film plastique (22a) sur la bande de viande. Les moyens (23) permettant de pouvoir enrouler la bande de viande sur elle-même se présentent quant à eux sous la forme d'un fourreau monté, agencé au niveau du convoyeur de sortie (21) maintenu par ses extrémités et monté libre en rotation de manière à pouvoir enrouler la bande de viande sur ledit fourreau.

Dans une autre forme de réalisation, l'installation (1), et plus particulièrement le convoyeur de sortie (21) comprend un poste de découpe et de conditionnement, consistant à découper en portions ladite bande de viande dépouillée de son film à perméabilité contrôlée.

Ainsi, lesdites portions sont minces et obtenues dans des configurations de découpe correspondant aux formes à obtenir souhaitées.

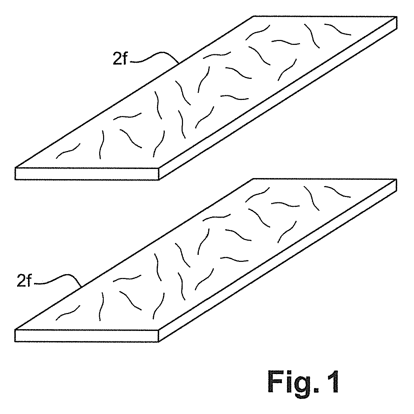

On a représenté figure 1, plusieurs portions de viande hachée (2f) qui se présentent ainsi dans un aspect totalement différent de celui d'origine. Ainsi, selon l'invention, les tranches de viande hachée offrent une texture compacte et il n'est plus décelable visuellement d'identifier la configuration d'origine.

Ce nouveau procédé de transformation de la viande hachée en plaques minces présente de nombreux et importants intérêts et avantages.

Il permet tout d'abord l'utilisation de matières premières variées, plus ou moins nobles, suivant ce que l'on souhaite, et permettant la valorisation de chutes de parages ou de muscles durs.

Il permet en outre d'obtenir une bande de viande qui est cuite en continu, présentant une stabilité microbiologique optimale.

Le procédé et l'installation (1) permettent également de rincer et de recycler la saumure de cuisson.

Il permet également l'obtention d'un produit très standardisé en aspect, forme, goût, texture, moelleux et régulier. Il permet l'intégration d'ingrédients qui diffusent leurs caractéristiques à travers toute la viande ainsi traitée durant le traitement.

Le procédé est industrialisable aisément en permettant un traitement rapide et en continu de cette viande hachée, avec un temps de transformation pouvant être seulement de quelques minutes à quelques heures. Il n'exige que peu de main d'oeuvre.

Selon un autre avantage, les feuilles (8a, 9a) de film assurent une triple fonction, à savoir de protection de la viande, d'interface avec la solution en autorisant la transmissibilité des propriétés de la solution jusque dans la viande, et également une fonction de transporteur tout au long du procédé.

La forme des tranches de viande hachée ainsi obtenues peut varier en fonction de l'outil de découpe et s'adapter à tout conditionnement possible.

Outre les formes classiques rectangulaires, l'outil de découpe permet l'obtention de formes plus complexes, en anneaux par exemple, en triangles, ou autres, pouvant apporter un aspect novateur à la commercialisation. La bande de viande peut également être enroulée sur elle-même pour former des tubes ou autres formes.

Les ingrédients et aromates peuvent être adaptés en fonction des lignes de fabrication, sur des quantités désirées et variables.

Sans sortir du cadre de l'invention, le procédé s'applique à toutes compositions à base de produits carnés.

## Revendications

1. Procédé de fabrication et de transformation de viande hachée (2a), le procédé mettant en oeuvre, à partir de viande préalablement hachée (2a), pour l'obtention en continu de viande hachée, cuite en continu (2e) reconstituée en plaques minces, les étapes consistant à :
- assurer une présentation en continu de ladite viande hachée (2a) sous forme d'un tube ou d'une bande aplatie continue (2b) ;
- déposer le tube ou la bande aplatie continue de viande (2b) entre deux feuilles (8a, 9a) de film à perméabilité contrôlée ;
- égaliser l'épaisseur et étaler la viande hachée disposée entre les deux feuilles (8a, 9a) de film, dans une configuration en bande, selon une couche mince, dans un état (2c) de compactage et de texture ne faisant pas apparaître les parties de viande elles-mêmes ;
le procédé étant **caractérisé en ce qu'**il met également en oeuvre les étapes suivantes :
- dérouler en continu dans un bain de solution de cuisson (15) la bande de viande hachée étirée;
- dérouler en continu dans une cuve de rinçage (16) la bande de viande hachée étirée cuite en continu ;
- enlever, en sortie de la cuve de rinçage (16), les feuilles (8a, 9a) de film à perméabilité contrôlée ;
- acheminer la bande mince de viande hachée laminée cuite en continu et rincée (2e) vers un convoyeur de sortie (21).

2. Procédé selon la revendication 1, ***caractérisé en ce qu***'il comprend, ultérieurement à l'étape consistant à égaliser l'épaisseur et étaler la viande hachée disposée entre les deux feuilles (8a, 9a) de film, les étapes consistant à écraser les bordures de la bande de viande (2c) de façon à isoler totalement la viande de la solution de cuisson, et à ajuster la surépaisseur de viande provoquée par l'écrasement.

3. Procédé selon la revendication 2, ***caractérisé en ce qu***'il comprend, ultérieurement aux étapes d'écrasement et d'ajustement de la surépaisseur, une étape consistant à replier les bordures écrasées sur la bande de viande (2c).

4. Procédé selon la revendication 1, ***caractérisé en ce qu***'il comprend, ultérieurement à l'étape d'acheminement de la bande mince de viande (2e) vers le convoyeur de sortie, une étape consistant à appliquer un film plastique intercalaire (22a) sur ladite bande de viande (2e) et à l'enrouler sur elle-même.

5. Procédé selon la revendication 1, ***caractérisé en ce qu***'il comprend, ultérieurement à l'étape d'acheminement de la bande mince de viande (2e) vers le convoyeur de sortie (21), une étape consistant à découper en continu ladite bande de viande.

6. Installation (1) pour la fabrication et la transformation de viande hachée (2a), à partir de viande préalablement hachée, pour l'obtention en continu de viande hachée, cuite en continu (2e) reconstituée en plaques minces, l'installation (1) comprenant :
- une trémie d'alimentation (3), recevant en sortie une pompe à viande (4) reliée à une buse d'extrusion (5) pour la présentation de la viande hachée sous forme d'un tube ou d'une bande aplatie continue (2b) ;
- un convoyeur (7) destiné à récupérer la bande de viande (2b) à la sortie de la buse d'extrusion (5) ;
- un premier système de distribution et de disposition (8) sur le convoyeur (7) d'une première feuille (8a) de film à perméabilité contrôlée, sous la bande de viande (2b) ;
- un deuxième système de distribution et de disposition (9) sur la bande de viande (2b) d'une deuxième feuille (9a) de film à perméabilité contrôlée ;
- un premier dispositif de laminage (10) disposé en aval desdits systèmes de distribution et de disposition (8, 9) des feuilles (8a, 9a) de film ;
l'installation (1) étant **caractérisée en ce qu'**elle comprend également :
- un bain de solution de cuisson (15) recevant un dispositif mécanique de convoyage (17) de la bande de viande hachée étirée cuite en continu (2d) ;
- une cuve de rinçage (16) recevant un dispositif mécanique de convoyage (17) de la bande de viande hachée étirée cuite en continu ;
- un dispositif (20) permettant de séparer les feuilles (8a, 9a) de film à perméabilité contrôlée de la bande de viande cuite en continu, en aval de la cuve de rinçage (16) ;
- un convoyeur de sortie (21).

7. Installation (1) selon la revendication 6, ***caractérisée en ce qu***'elle comprend en aval du dispositif de laminage (10), deux molettes d'écrasement (11) des bordures de la bande de viande, un deuxième dispositif de laminage (12), et des moyens (13) permettant le pliage des bordures écrasées de la bande de viande, sur ladite bande de viande.

8. Installation (1) selon la revendication 6, ***caractérisée en ce qu***'elle comprend, en aval du convoyeur de sortie (21), un système de distribution et de disposition (22) d'un film plastique (22a) sur la bande de viande et des moyens (23) permettant d'enrouler la bande de viande sur elle-même.

9. Installation (1) selon la revendication 6, ***caractérisée en ce qu***'elle comprend, en aval du convoyeur de sortie (21), un dispositif de découpe et de conditionnement en tranches fines de la viande hachée.

10. Installation (1) selon la revendication 6, ***caractérisée en ce que*** le bain de solution de cuisson (15) est un bain de saumure de cuisson (15b) à une température supérieure à 60°C et possédant un pH inférieur à 7.

## Patentansprüche

1. Verfahren zur Herstellung und Weiterverarbeitung von Hackfleisch (2a), wobei im Rahmen des Verfahrens nachstehende Arbeitsschritte ausgeführt werden, um kontinuierlich aus zuvor zerkleinertem Fleisch (2a) kontinuierlich gegartes und in dünnen Pellets restrukturiertes Hackfleisch (2e) zu erhalten:
- Sicherung einer kontinuierlichen Zuführung des Hackfleisches (2a) in Form eines kontinuierlichen, runden oder abgeflachten Strangs (2b);
- Positionierung des kontinuierlichen, runden oder abgeflachten Fleischstrangs (2b) zwischen zwei Folienstreifen (8a, 9a) mit kontrollierter Durchlässigkeit;
- Erzielung einer gleichförmigen Dicke und Streckung des Hackfleischs zwischen den beiden Folienstreifen (8a, 9a) zu einer dünnen Schicht in Bandform zur Erzielung eines Verdichtungs- und Texturzustands (2c), bei dem die Fleischteile selbst nicht mehr erkennbar sind;
wobei das Verfahren **dadurch gekennzeichnet ist, dass** darüber hinaus folgende Arbeitsschritte ausgeführt werden:
- kontinuierliches Abrollen des gestreckten Hackfleischbandes in ein Bad aus Garlösung (15);
- kontinuierliches Abrollen des gestreckten, kontinuierlich gegarten Hackfleischbandes in einen Spültrog (16);
- nach Verlassen des Spültrogs (16), Entfernung der Folienstreifen (8a, 9a) mit kontrollierter Durchlässigkeit;
- Abtransport des dünnen Bandes aus gewalztem, kontinuierlich gegartem und gespültem Hackfleisch (2e) zu einem Ausgangsförderer (21).

2. Verfahren nach Anspruch 1, **dadurch gekennzeichnet, dass** das Verfahren nach dem Schritt zur Erzielung einer gleichförmigen Dicke und Streckung des Hackfleischs zwischen den beiden Folienstreifen (8a, 9a) weitere Arbeitsschritte zum Abquetschen der Randstreifen des Fleischbandes (2c) umfasst, um das Fleisch komplett von der Garlösung zu isolieren und die durch das Abquetschen verursachten Verdickungen auszugleichen.

3. Verfahren nach Anspruch 2, **dadurch gekennzeichnet, dass** das Verfahren nach den Schritten zum Abquetschen und Ausgleichen der Verdickungen einen Arbeitsschritt umfasst, der darin besteht, die gequetschten Ränder wieder auf das Fleischband (2c) zu klappen.

4. Verfahren nach Anspruch 1, **dadurch gekennzeichnet, dass** das Verfahren nach dem Schritt zum Abtransport des dünnen Fleischbandes (2e) zum Ausgangsförderer einen Arbeitsschritt umfasst, der darin besteht, eine Zwischenlage (22a) aus Kunststofffolie auf das Fleischband (2e) aufzutragen und dieses um die eigene Achse zusammenzurollen.

5. Verfahren nach Anspruch 1, **dadurch gekennzeichnet, dass** das Verfahren nach dem Schritt zum Abtransport des dünnen Fleischbandes (2e) zum Ausgangsförderer (21) einen Arbeitsschritt umfasst, der darin besteht, das Fleischband kontinuierlich zuzuschneiden.

6. Anlage (1) zur Herstellung und Weiterverarbeitung von Hackfleisch (2a), wobei die Anlage (1) nachstehende Anlagenteile umfasst, um kontinuierlich aus zuvor zerkleinertem Fleisch kontinuierlich gegartes und in dünnen Pellets restrukturiertes Hackfleisch (2e) zu erhalten:
- Einen Fülltrichter (3), an dessen Ausgang sich zur Zuführung des Hackfleisches in Form eines kontinuierlichen, runden oder abgeflachten Strangs (2b) eine Fleischpumpe (4) befindet, die mit einer Extrusionsdüse (5) verbunden ist;
- einen Förderer (7) zur Aufnahme des Fleischbandes (2b) am Ausgang der Extrusionsdüse (5);
- ein erstes System zur Ausgabe und Anordnung (8) auf dem Förderer (7) eines ersten Folienstreifens (8a) mit kontrollierter Durchlässigkeit unter dem Fleischband (2b);
- ein zweites System zur Ausgabe und Anordnung (9) eines zweiten Folienstreifens (9a) mit kontrollierter Durchlässigkeit auf dem Fleischband (2b);
- eine erste Walzvorrichtung (10), die hinter den Systemen zur Ausgabe und Anordnung (8, 9) der Folienstreifen (8a, 9a) angeordnet ist;
wobei die Anlage (1) **dadurch gekennzeichnet ist, dass** sie außerdem Folgendes umfasst
- ein Bad aus Garlösung (15) mit einer mechanischen Vorrichtung (17) zur Beförderung des gestreckten, kontinuierlich gegarten Hackfleischs (2d);
- einen Spültrog (16) mit einer mechanischen Vorrichtung (17) zur Beförderung des gestreckten, kontinuierlich gegarten Hackfleischs;
- eine Vorrichtung (20) zum Ablösen der Folienstreifen (8a, 9a) mit kontrollierter Durchlässigkeit vom kontinuierlich gegarten Fleischband im Anschluss an den Spültrog (16);
- einen Ausgangsförderer (21).

7. Anlage (1) nach Anspruch 6, **dadurch gekennzeichnet, dass** die Anlage im Anschluss an die Walzvorrichtung (10) zwei Quetschmesser (11) zum Abquetschen der Fleischbandränder, eine zweite Walzvorrichtung (12) und Mittel (13) zum Umklappen der gequetschten Fleischbandränder auf das Fleischband umfasst.

8. Anlage (1) nach Anspruch 6, **dadurch gekennzeichnet, dass** die Anlage im Anschluss an den Ausgangsförderer (21) ein System zur Ausgabe und Anordnung (22) einer Kunststofffolie (22a) auf das Fleischband und Mittel (23) zum Zusammenrollen des Fleischbandes um die eigene Achse umfasst.

9. Anlage (1) nach Anspruch 6, **dadurch gekennzeichnet, dass** die Anlage im Anschluss an den Ausgangsförderer (21) eine Vorrichtung zum Zuschneiden und Abpacken von Hackfleisch in dünnen Scheiben umfasst.

10. Anlage (1) nach Anspruch 6, **dadurch gekennzeichnet, dass** es sich bei dem Bad aus Garlösung (15) um ein Gar-Salzbad (15b) mit einer Temperatur von über 60° und einem pH-Wert von unter 7 handelt.

## Claims

1. A method of producing and transforming minced meat (2a), the method taking previously minced meat (2a), for the purpose of continuously obtaining from it minced meat, that is continuously cooked (2e) and that is reconstituted in the form of thin slabs, the method implementing the steps consisting in:
- continuously presenting said minced meat (2a) in the form of a continuous "rope" or of a continuous flattened strip (2b);
- depositing the continuous "rope" or flattened strip of meat (2b) between two sheets (8a, 9a) of film having controlled permeability;
- evening out the thickness of and spreading the minced meat placed between the two sheets (8a, 9a) of film, in a strip configuration, so as to shape it into a thin layer, in a state (2c) of compaction and of texture that does not show the portions of meat themselves;
the method being **characterized in that** it also implements the following steps:
- continuously feeding the drawn strip of minced meat through bath of cooking solution (15);
- continuously feeding the continuously cooked drawn strip of minced meat through a rinsing tank (16);
- at the outlet of the rinsing tank (16), removing the sheets (8a, 9a) of film having controlled permeability;
- bringing the rinsed and continuously cooked thin strip of minced meat (2e) to an outlet conveyor (21).

2. Method according to claim 1, **characterized in that**, subsequently to the step consisting in evening out the thickness of and spreading the minced meat placed between the two sheets (8a, 9a) of film, the method further includes the steps consisting in crushing the edges of the strip of meat (2c) in such a manner as to isolate the meat totally from the cooking solution, and in adjusting the extra thickness of meat caused by the crushing.

3. Method according to claim 2, **characterized in that**, subsequently to the steps of crushing and of adjusting the extra thickness, the method further includes a step consisting in folding over the crushed edges onto the strip of meat (2c).

4. Method according to claim 1, **characterized in that**, subsequently to the step of bringing the thin strip of meat (2e) to the outlet conveyor, the method further includes a step consisting in applying a separator plastics film (22a) onto said strip of meat (2e) and of rolling it up.

5. Method according to claim 1, **characterized in that**, subsequently to the step of bringing the thin strip of meat (2e) to the outlet conveyor (21), the method further includes a step consisting in continuously cutting up said strip of meat.

6. An installation (1) for producing and transforming minced meat (2a), the installation taking previously minced meat for the purpose of continuously obtaining from it minced meat that is continuously cooked (2e) and that is reconstituted in the form of thin slabs, the installation (1) comprising:
- a feed hopper (3), receiving at its outlet a meat pump (4) connected to an extrusion nozzle (5) for presenting the minced meat in the form of a continuous "rope" or of a continuous flattened strip (2b);
- a conveyor (7) designed to receive the strip of meat (2b) at the outlet of the extrusion nozzle (5);
- a first dispensing and placement system (8) for dispensing a first sheet (8a) of film having controlled permeability and for placing it on the conveyor (7), under the strip of meat (2b);
- a second dispensing and placement system (9) for dispensing a second sheet (9a) of film having controlled permeability and for placing it over the strip of meat (2b);
- a first rolling device (10) disposed downstream from said dispensing and placement systems (8, 9) for dispensing and placing the sheets (8a, 9a) of film;
the installation (1) being **characterized in that** it further comprises:
- a bath of cooking solution (15) receiving a mechanical conveyor device (17) for conveying the continuously cooked and drawn strip of minced meat (2d);
- a rinsing tank (16) receiving a mechanical conveyor device (17) for conveying the continuously cooked and drawn strip of minced meat;
- a device (20) making it possible to separate the sheets (8a, 9a) of film having controlled permeability from the continuously cooked strip of meat, downstream from the rinsing tank (16); and
- an outlet conveyor (21).

7. Installation (1) according to claim 6, **characterized in that**, downstream from the rolling device (10), it further comprises two crushing wheels (11) for crushing the edges of the strip of meat, a second rolling device (12), and means (13) for enabling the crushed edges of the strip of meat to be folded over onto said strip of meat.

8. Installation (1) according to claim 6, **characterized in that**, downstream from the outlet conveyor (21), it further comprises a dispensing and placement system (22) for dispensing a plastics film (22a) and for placing it over the strip of meat and means (23) enabling the strip of meat to be rolled up.

9. Installation (1) according to claim 6, **characterized in that**, downstream from the outlet conveyor (21), it further comprises a cutting and packaging device for cutting the minced meat into thin slices and for packaging it.

10. Installation (1) according to claim 6, **characterized in that** the bath of cooking solution (15) is a bath of cooking brine (15b) at a temperature greater than 60°C and having a pH less than 7.
